# EUROPEAN PATENT SPECIFICATION

(11) **EP 0 735 928 B1**
(45) Date of publication and mention of the grant of the patent: **09.06.1999**
(21) Application number: 95903858.9
(22) Date of filing: 19.12.1994
(51) Int. Cl.: B09C 1/06, C02F 11/00, C10G 1/02, B01J 8/14, E21B 21/06

(54) **CONTAMINANT REMOVAL**
VERFAHREN UND VORRICHTUNG ZUR ENTFERNUNG VON VERUNREINIGUNGEN
EXTRACTION D'AGENTS CONTAMINANTS

(30) Priority: 24.12.1993 GB 9326456; 09.08.1994 GB 9416070
(43) Date of publication of application: 09.10.1996
(73) Proprietor: MORTIMER TECHNOLOGY HOLDINGS LIMITED, Reading Berkshire RG7 3SY (GB)
(72) Inventor: ATKINS, Martin, Philip, Ashford Middlesex TW15 2QU (GB); COLMAN, Derek, Alan, Fleet Hampshire GU13 8PR (GB); DODSON, Christopher, Edward, Reading Berkshire RG7 3PG (GB)
(74) Representative: McLeish, Nicholas Alistair Maxwell
(86) International application number: GB9402768
(87) International publication number: WO9517982

(56) References cited:
- EP-A- 0 068 853
- EP-A- 0 324 566
- WO-A-93/15361
- WO-A-94/19122
- DE-A- 3 814 723
- US-A- 4 685 220
- US-A- 4 869 810
- US-A- 4 880 528
- US-A- 5 075 981

## Description

This present invention relates to a method for the removal of organic contaminants, especially oily contaminants, from solid particulate material and more particularly to a method for the removal of oil from cuttings obtained from drilling operations using oil-based drilling muds.

Drilling muds are used to carry rock cuttings out of the wellbore and to the surface. Both water-based and oil-based muds are used as drilling muds. Water-based muds are generally cheaper and less toxic than those based on oil but the latter possess many operational advantages, particularly for the drilling of high angle, long reach and high pressure/high temperature wells.

However conventional oil based muds also suffer from a number of undesirable characteristics. In particular oil may be retained in association with the drill cuttings resulting in adverse environmental considerations.

It is very important therefore that any oil retained on cuttings should be removed before disposal, particularly in drilling operations offshore where cuttings may be discharged to the sea, rivers or lakes and cause oil pollution e.g. of the marine environment. Alternatively they have to be transported onshore for disposal which can be costly and time consuming. Future legislation will also require current discharge levels to be reduced.

If the use of oil based drilling muds is to continue, despite more restrictive discharge legislation, efficient methods of reducing or preventing oil pollution on cutting discharge will be required.

A solution to the problem of reducing oil discharge into the sea would be the use of treatment facilities on an offshore platform to remove the oil and allow the discharge of clean cuttings into the sea.

Several methods have been used to remove oil from drill cuttings. In one method the oil based mud is washed from the surface of the cuttings by use of a fluid medium, for example a detergent. The cuttings are then discharged and the oil recovered from the wash fluid. A major limitation in this method is that oil internally absorbed into the pores of the rock cannot be removed and between 30 and 50% of the original oil may be retained.

Another method involves cleaning rather than washing the cuttings. This may be carried out by means of a solvent extraction system using, for example, toluene or methylene chloride as the solvent. Oil may be extracted from the cuttings and then removed from the solvent and reused. However the potential hazards caused by the toxic nature of the solvent chemicals has raised doubts about the method.

US-A-4880528 describes a method and apparatus for utilising tar sands, which are pyrolyzed in a cyclone retort to give pyrolyzed hydrocarbon gas and spent tar sands, which sands are separately burnt to remove char and give hot combustion gas, which is used to reheat the residual gases left from the pyrolyzed hydrocarbon gas after removal of condensable hydrocarbons. The reheated residual gases are recycled to the cyclone retort.

US-A-4869810 describes a method of separating oil from contaminated materials like drilling mud, in which the materials are located in a friction evaporator to evaporate the oil, which is then condensed, preferably by scrubbing with product oil.

EP-A-0324566 describes a method for separating organic materials from contaminated solids by indirect heating in a rotary drier, to give organic vapours and water, which are separated from residual gas which can be recycled to the drier.

EP-A-0068853 describes a toroidal reactor which can be used for thermal processing grinding and mixing. Further details are given below.

WO 94/19122, which was published after the priority date of the present application, describes use of the toroidal reactor of EP-A-0068853 for the evaporation of petroleum products from contaminated solids preferably in the presence of added steam or petroleum solvent and recycle of residual gases after condensation of petroleum materials.

Substantially all the organic contaminants can be combusted in a toroidal reactor to produce particles substantially free from contaminants for safe disposal into the sea or land fill operations.

We have now found a method capable of removing substantially all the organic contaminants in which a toroidal reactor may be used to produce the substantially organic free particles for safe disposal into the sea or land fill operations, while also being capable of separating organic values from the contaminants and involving significant energy savings. In particular we have also found that heating in a toroidal reactor under inert conditions call give a gaseous mixture comprising non condensable gases, condensable organic compounds e.g. hydrocarbons and water and then high temperature contact of the gaseous mixture with liquid hydrocarbon call separate condensable hydrocarbons from water.

The present invention provides a method for reducing the organic content of solid particles containing at least one organic contaminant, which method comprises:
(a) providing solid particles contaminated with an organic contaminant to an upper zone of a processing chamber having a substantially non-oxidising atmosphere,
(b) passing a non-oxidizing fluid from a lower zone of said chamber to said upper zone to generate a circumferentially directed flow of fluid within the chamber to cause the particles to circulate about a substantially vertical axis of the chamber in a turbulent compact band,
(c) heating to convert, in said atmosphere, at least one organic contaminant with the particles into a gaseous material,
(d) removing the particles having a reduced organic contaminant level from the chamber, and
(e) recycling at least part of said gaseous material without removal of condensible components therefrom from above said band in said upper zone to said lower zone and then to pass through the band and become at least part of said fluid. and (f) passing high energy gas into said chamber in order to provide the motive force for supporting the particles in the band and/or the recycling.

The fluid which is circumferentially directed in the chamber, comprises at least part of the gaseous material, which passes through the band.

In a second aspect, the present invention provides all apparatus suitable for reducing the organic content of organic contaminated solid particles, which comprises:
(a) a processing chamber having an upper conversion zone and a lower zone in gaseous communication with said upper zone,
(b) means for providing said solid particles to said upper zone,
(c) means for providing fluid to said lower zone,
(d) means for generating a circumferentially directed flow of fluid in said upper zone to cause said particles to circulate in said upper zone about a substantially vertical axis in said chamber in a turbulent compact band,
(e) heating means for converting at least some of the organic contaminant to a gaseous material,
(f) means for removing particles from said band,
(g) means for recycling at least part of said gaseous material without removal of condensible components therefrom from said upper zone to said lower zone and hence back to said upper zone through said band,
and (n) a mixer in said chamber and circulating means comprising one or more input lines for high energy gas passing into said mixer.

Preferably the apparatus comprises also
(h) means for contacting said gaseous material with an organic liquid to produce a gaseous phase and a liquid phase.
(i) means for separating said gaseous phase from said liquid phase, and especially and
(i) optionally means for recycling a portion of said liquid phase to said contacting means (h).
   And optionally,
(k) means for contacting said gaseous phase with a second liquid to produce a second gaseous phase and a second liquid phase and
(l) means for separating said second gaseous phase from said second liquid phase and optionally (m) means for recycling a portion of said second liquid phase to said contacting means (k).

Thus means (b) may be an inlet to the upper zone, usually with solid feed means, while means (c) may be an inlet to the lower zone for the fluid, either an inlet from the upper zone e.g. when the latter has a generator for the fluid or an inlet into the lower zone from outside the chamber when the fluid is generated outside. Means (d) maybe a series of angular blades in an annulus at the base of said upper zone, the upper and lower zones being in gaseous communication between said blades. Means (e) may be a heater, e.g. either a burner in upper or lower zone or outside said chamber but in gaseous communication therewith, while means (f) may be an outlet from said chamber e.g. through at least one of the upper and lower zones. Means (g) may be a circulating means as described hereinafter. Means (h) or (k) may be a scrubber or a venturi device, while Means (i) or (l) may be a gravity separator or cyclone. Means (j) or (m) may be a pump for pumping liquid in communication with means (h) and (i) or (k) and (l) respectively.

The conversion in the chamber may be a physical one, converting a liquid eg. diesel oil or kerosene contaminant with the particles into a gas eg. hydrocarbons gaseous at the conversion temperature (though preferably liquid at 25°C). The conversion may also be a chemical one eg. cracking of at least one contaminant to lower molecular weight materials; usually the conversion is without significant combustion especially substantially in the absence of combustion. Usually, with a heavy oil, there is some physical conversion ie. evaporation and some cracking. However, generally the process is performed in the substantial absence of cracking of the organic contaminant. The gaseous material may also comprise a mist of droplets of liquid (like an aerosol) eg. of average diameter of 5-200 micron.

The solid particles comprise at least one contaminant which is liquid at 25°C in amount of at least 0.01% eg. at least 0.1% or at least 1% by weight (based on the total weight of solid particles and organic contaminants). The total amount of organic contaminants especially of liquid contaminants is usually 0.5-80% e.g. 0.5-50%, 1-30% or 1-20% such as 5-15% or may be 5-80% e.g. 20-80%, all by weight on the same basis. The solid particles may comprise at least 20% of the total weight of solid and contaminants but usually comprise a majority and especially at least 60%, 70% or 80% of the total of solid and contaminants. The contaminated solid particles are usually sticky solids.

The organic contaminant is usually a liquid and especially a liquid hydrocarbon. The contaminant may be volatilizable as such eg. at 400°C such as a hydrocarbon oil eg. gas oil, diesel oil or kerosene, or the products obtained by cracking it in the processing chamber may be volatilizable or entrainable as a mist of droplets, such as with heavier oils eg. refining oil or crude oil.

In particular the oil is one used to make oil based drilling muds such as diesel oil or kerosene. The solid may also be contaminated with water as well as the organic contaminant as happens with many drill cuttings; the amount of water may be 0.5-50%, 1-30% or 1-20% eg. 2-10% or 5-20% by weight of the total of water and solid particles. The contaminated solid usually contains an inorganic chloride containing compound eg. with at least 0.01% or 0.1% such as at least 1%wt e.g. 1-40% chloride ion in the contaminated solid. Preferably the contaminated solid particles comprise 60 - 92% inorganic solid, 5-30% (e.g. 5-20% or 8-30%) organic contaminant and 3-30% (e.g. 3-20% or 5-30%) of water, based on the total weight of the particles, in the case of the drill cuttings amounts of any inorganic drilling fluid components such as inorganic weighting agents, such as barytes and/or densifying agents such as alkali metal or alkaline earth metal (eg. Mg, Ca) halides or viscosifiers eg. clays such as bentonite are included in the inorganic solid percentage. The drilling fluid may also contain up to 20% of organic additives which may be solid or liquid, such as viscosifiers e.g. xanthan gum or sealants such as asphaltenes.

The solid particles are ones capable of being contaminated and usually stable to the conditions for volatilization eg. stable to at least 600°C or especially at least 800°C. The solid particles are usually particles impregnated with the organic contaminant but may comprise adherent organic contaminant. They are usually inorganic and are preferably of rock, especially sandstone (including rotliegendes sandstone), siltstone, shale and halite. The invention is particularly useful for removing oil from drill cuttings or from shale, but is also useful for removing pollutant oil and oil residues from sand, pebbles or soil and for treating refinery sludges, oil residues and similar wastes and foundry sand. The diameter of the particles is preferably less than 3 cm, most preferably less than 2 cm, such as 0.1 - 30 mm or 0.5 - 20 mm.

The solid particles in particular drill cuttings are often in the form of a sticky mass comprising inorganic particles, often of 2 particle size ranges, as well as organic contaminant e.g. oil and often water. The inorganic particles are usually insulating with poor thermal conductivity, and are often at least partly siliceous. The particles may have a fine component comprising clay eg. bentonite and rock flours and inorganic water insoluble salts e.g. barytes, the fine component having an average particle size of 2-800microns such as 5-400microns. The particles may also have a coarse component comprising the rock, with an average particle size of 0. 2-30mm such as 3-20mm. The coarse and fine components may be present in relative weight amounts of 10-90:90-10 in particular 50-80:50-20. Inorganic water soluble salts eg. alkali metal or alkaline earth metal halides may be present eg. with the rock and/or fines and/or in the water (if present).

In the processing chamber the particles are formed into a turbulent compact band circulating around an axis of the chamber which is substantially vertical e.g. with a possible deviation of up to 15° or 5° either side of vertical.

Usually the processing chamber is of circular-cross section in its vertical orientation and is suitably of a cylindrical shape into which the fluid ie. hot gas, is introduced from the base thereof ie. through a lower zone and the solid particles whose organic content is to be reduced can be introduced either from the top thereof or via a side feed directly into the band. The hot gas can be introduced into the chamber in the form of a jet stream which passes through a series of angular fixed blades arranged in a circular shape corresponding to the internal circumference of the processing chamber at its widest internal diameter. This configuration causes the hot gas directed at the underside of the blades at an angle parallel to the axis of the chamber to be deflected by the blades and emerge into the chamber at an angle away from the axis and towards the circumference of the chamber. The continuous upward flow of the hot gas causes particles entrained in the flow to move in a toroidal band. This effect is accentuated by the gravitational effect which urges the entrained particles to fall back. However, the ratio of the mass of the entrained particles and the velocity of flow of the hot gas is so selected that they enable the particles of the bed to remain in suspension and thereby assume and remain in a substantially toroidal shape. By "toroidal" shape is meant here and throughout the specification that the gases are caused to flow so that the particles move in a circular fashion forming a cylindrical doughnut shape around the widest internal circumference of the chamber with respect to the central axis of the processing chamber but also in a spiral flow around the internal circular axis of the doughnut shape so formed. The mode of entry of the hot gas is so controlled by a series of spaced baffles or blades, which suitably form an annulus at the base of the chamber, that the creation of a toroidal shape is facilitated and accentuated. The rate of flow of the hot gas into the processing chamber is so controlled that the gas acts as a support medium for a bed of particulate material which is kept afloat and in suspension above the support medium rather on the principle of a "hovercraft". The toroidal shape of the particulate band particles and the direction of flow of the hot gas also causes the incoming contaminated particles to move in a toroidal manner and intermingle substantially thoroughly and uniformly with the particles already in the band. A particularly suitable apparatus of this type which can be used in the process of the present invention is claimed and described in the published EP-A-0 068 853, the disclosure of which is incorporated herein by reference. In this publication, the apparatus described also acts on the "hovercraft" principle and uses a momentum of exchange between a gas stream (the hot gas) and a mass (the solid particles). By inverting the flow of the gas stream (compared to that in a hovercraft) and by channelling the gas stream through a series of blades, the resultant linear jets of gas act as a support medium for a shallow bed (50-75 mm in depth) of particles which can be floated over the gas stream. The hot gas usually has a velocity through the blades of at least 20m/sec e.g. 40-100m/sec. The blades convert the pressure head in the gas stream into a velocity head and, by suitable blade design, forces can be exerted on the band causing it to lift and be transported horizontially. This exchange of energy is one of the fundamental differences between a fluidized bed reactor and the reactor apparatus of EP-A-0 068 853, which is sold under the trade mark "TORBED^{R}" in which a toroidal bed of particulate material is achieved.

In the case of the TORBED^{R} reactor, the momentum of the gas stream, which is normally the product of mass flow and its velocity, for a given bed may be supported either by a low velocity gas stream with a high mass flowrate, or, by a high velocity gas stream with a correspondingly low mass flowrate.

The ability to control the momentum of the hot gas as described above enables the use of particles having large-size range distributions. Thus the shape of the particles being processed need not be spheroidal; they may be flakes, rings, extrudates or of other irregular shapes, but are preferably not sheet like structures such as metal shavings.

In the TORBED^{R} reactor, blades are formed into an annulus at the base of the process chamber thereby enabling maximum exposure of all the material in the particulate band to the area in which the velocity of the gases are at a maximum.

EP 68853 describes apparatus for processing matter in a fluidised bed of particulate material whereby the matter to be processed is suspended as a shallow bed above jets of support medium. The bed is annular and a gently rotating bed of material can be contained in a compact shape with the support medium being passed through the bed. By causing the bed material to circulate in this way a toroidal bed of particulate material is achieved with advantages over conventional fluidised or packed bed processes. Generally hot fluid gas is passed upwardly and circumferentially through a multitude of inlets e.g. in the form of a ring of fixed blades, located in an annulus, onto which the particles are slowly discharged, preferably substantially uniformly round the annulus. The gas supports the particles and causes them to circulate turbulently in a toroidal band round the chamber above the annulus. The openings are usually at an acute angle to the said circulation axis e.g. 45-80° to said axis. The circumferential or spinning motion of the gas above the annulus is maintained above the band of particles and into the top of the reactor prior to exit of the gases from it.

The hot gas is substantially inert under the reaction conditions to the organic contaminant being converted to a gaseous material and to the gaseous material as well. The gas is substantially non oxidizing. Examples of gases which are substantially free of molecular oxygen, that may be used, include hydrogen, nitrogen, steam, carbon monoxide, carbon dioxide, and flue gases (which may comprise carbon monoxide and/or carbon dioxide and optionally lower alkanes such as methane, ethane, propane or mixtures thereof); exit gases which are at least part of the by-products of the conversion process of this invention are present. Mixtures of the above gases may be used. Preferably the hot gas comprises flue gases, and especially also steam. The recycle process comprises recycle exit gases and especially also steam. Steam may be injected directly into the processing chamber or indirectly via the lower zone and through the band of particles.

The heating for the gas to generate a hot gas may be provided by burners located suitably beneath the annular baffles/blades at the base of the processing chamber or externally of the apparatus comprising the chamber. Advantageously the burner may be located in a central zone to the reactor e.g. in the top of the reactor, with the hot combustion products passing down through that zone and then into the lower zone below the annular baffles or blades. In this arrangement the central zone contains the burner and is separated from the annular band, which lies in an annulus around the central zone, the inner wall of the annulus having a lower passage therethrough or not extending to the base of the lower zone, so the combustion products can move into that zone and up through the annular band. The inner wall of the annulus may also have an upper passage therethrough or may not extend to the top of the reactor to allow at least some gaseous material to be recycled back into the central zone.

Preferably however the burner to generate the flue gas is located beneath, where the band of particles will be during operations especially beneath the annular blades of the reactor. Advantageously the burner is central in the lower zone or a number of burners are symmetrically distributed about the central axis of that zone. Steam is preferably provided into the lower zone as well for mixing with the flue gas in a mixing zone in the lower zone below the blades. The mixing zone may comprise a constriction in the diameter of the lower zone or may comprise a special mixer e.g. a short venturi mixer such as one with a minimum width to length ratio of 0.5:1 to 2:1. The steam itself may be inserted directly into the lower zone or via a venturi or other mixer with no moving parts, e.g. a long venturi with maximum width to length ratio of 1:10-40. Advantageously the steam is mixed in the latter mixer with a portion of exit gas which had been recycled from the upper zone, e.g. via an annulus surrounding the upper and lower zones. The steam is preferably high pressure steam and can provide the motive power for the fluid to support the solids in the turbulent compact band; further details of the conditions of the steam are given below.

The organic contaminant is suitably converted into a gaseous material at a temperature in the range from 300 - 900°C, e.g. a temperature of 350 - 650°C or 500 - 800°C. Conversion temperatures are usually below the melting point of the inorganic particles, especially at least 20°C or 50°C below said point; hence for particles comprising halites, temperatures are usually below 700°C especially below 600°C. The temperature of the fluid 25mm above the bed may be 500-800°C, especially 500-600°C while the temperature of the gaseous material in the upper zone of the reactor, and usually at its exit from the reactor is usually 350-800°C such as 350-500°C or 600-800°C. The process may be operated substantially without any cracking e.g. at less than 650°C such as 350-600°C, and may give exit temperatures for the gaseous material from the reactor of 350-450°C; this process is especially suited when the organic contaminant is a light hydrocarbon oil e.g. gas oil, diesel oil or kerosene, and the particles are drill cuttings, so the recovered oil may be substantially reused in a drilling fluid. The process may also be operated with cracking e.g. at 650-800°C, with exit temperatures for the gaseous material from the reactor of e.g. 650-800°C this process is especially suited when the organic contaminant is an oil residue e.g. from an extraction of oil shale or coal (or a soil contaminated with such a residue), and comprises higher boiling hydrocarbons. The reactor and especially the processing chamber may be made of metal e.g. steel optionally with a ceramic liner, rather than the chamber itself being made of ceramic, resulting in a lighter reactor; refractory chambers or liners are preferably substantially absent from the reactor.

The residence time of the contaminant in the processing chamber is suitably very short eg. 0.5 - 100 seconds eg. 5 - 30 seconds, and is preferably of the order of less than 20 seconds, most preferably from 1 - 3 seconds especially in the band and 0.5 - 5 seconds during passage of contaminated solid through the chamber from the entry port to the band.

The process of the present invention can be carried out by a batch, semi continuous or a continuous process. It is preferable to use a reactor in which particles of at least partly reduced organic content are withdrawn through a central or annular discharge facility at the base of the reactor or a side exit port whereas the exit gases containing the gaseous material are at least partly recovered from the top of the reactor. Advantageously the particles are withdrawn by falling over a weir internal or external of the band of hot solids in the reactor; they can then fall down a central or annular discharge facility e.g. in a discharge zone of the reactor or directly to outside the reactor. The discharge zone may be separated from the lower zone of the reactor, preferably by an insulated wall. If desired, means for removing solid fines e.g. a cyclone may be entered by the exit gaseous material shortly after leaving the chamber or reactor in order to reduce its solid content. Alternatively (or in addition), the fines may be removed through an outwardly extending passage in the reactor side wall, or preferably in an annular wall near the side wall; the passage may be in the annular wall or between the wall and the reactor top. Advantageously the annular wall is the outer wall of the annulus in which lies the band of solid being treated, and the exit for gaseous material lies at the top of this annulus. The annular wall may also, with the reactor wall, form an outer annulus for the fines to pass through and drop into the discharge zone below the lower zone, where they may meet the treated solid overflowing the weir. The swirling motion of gaseous material in the top of the reactor aids separation of the fines directly from the top of the reactor. Preferably the reactor has (i) a central zone for the burner and gas means for recycling gaseous material, (ii) an inner annulus surrounding the central zone having a lower zone in gaseous communication with said zone providing the means for generating the flow of fluid to cause the particles to move in the band, and the upper zone in gaseous communication with the central zone, (iii) an outer annulus in solid communication with said upper zone and in solid communication with a lower discharge zone, and (iv) an annular discharge facility taking solid from said band and passing it through (v) an insulated wall separating said lower discharge zone from said lower zone.

Advantageously when the reactor has a central zone for the burner and means for recycling gaseous material, and said central zone is beneath the blades in the lower zone, then the solids removal is achieved with a reactor having (a) an inner annulus surrounding the upper and lower zones in gaseous and solid communication with the upper zone at the means for removing solid fines e.g. at the solids exit from the internal or external cyclone, and (b) an inlet into said annulus in solid communication with the outlet from the weir. Thus fines are separated in the top of the upper zone (or outside the reactor) and pass into the annulus and drop down it, meeting on the way solids falling over the weir and dropping into the annulus. If desired the annulus (a) for the fines and the exit in communication with the weir can be separate. A portion of the exit gas, optionally after removal of fines, may pass down an outer annulus, e.g. surrounding the inner solids annulus, and pass below or into the lower zone and then pass into the mixer to mix with the steam in the lower zone.

Sealing means are usually provided to restrict or stop entry of air or other oxidizing gas into the chamber and exit of hot gases from the chamber while the solid particulate feed or product is being moved respectively into or out of the chamber. Conveniently the means involves a closed hopper and/or rotary valve for the feed and a heavy duty gate valve and/or liquid seal for the product, so that the decontaminated product can pass in a pipe under the surface of a liquid eg. water, such as a stream of moving water in a pipe or tank.

The method of invention produces from the organic contaminant a gaseous material which leaves the processing chamber in the exit gas which may also contain the fluid for the toroidal band, in particular flue gas, and especially also steam. Optionally only some of the exit gas can be passed to a burner for combustion eg. as fuel for the burners providing heat or hot gases to the processing chamber or as fuel for boilers to generate steam for general use or for eventual return to the processing chamber either directly or indirectly; in the indirect steam return the steam may be mixed with recycle gaseous material or components thereof, as further described below.

Alternatively, or in addition, at least some of the gaseous material, e.g. higher boiling components may be condensed with or without separation of its components. Thus liquid oils may be condensed prior to use as fuel for the burners or for boilers to raise steam both as described above; when the initial contaminant was a drilling oil, the condensed liquid oil may be reused for this purpose. Conveniently any water which has also condensed and forms a separate liquid phase from the oil is separated from that oil. Any uncondensed gaseous material from the condenser may be used as fuel for burners or boilers as described above or recycled as described below, while any uncondensed and non combustible gases e.g. nitrogen, can be vented.

Preferably however, at least some of the gaseous material, e.g. higher boiling components may be recovered, as described further below.

At least some of the gaseous material is recycled from the upper zone to the lower zone and through the band of particles. Some of the gaseous material is recycled from the upper zone without removal of condensible components therefrom. The gaseous material recycled is usually one that is gaseous at 300°C, preferably at 100°C, especially at 25°C, all under approximately atmospheric pressure. The recycle may be internally in the reactor by means of one or more passages or conduits in the reactor from the upper to the lower zone eg. down its central core or via an annulus surrounding the processing chamber. The recycle may be externally of the reactor via a pipe spaced from the reactor walls, which pipe passes in a loop from the upper to lower zone. Advantageously the passage, conduit or loop is provided with means for circulating the gaseous material from said upper to lower zone. The circulating means may be mechanically operated with moving parts, such as a fan or pump, but is especially one with no moving parts, but with the motive force for circulation provided by an input of high energy gas, eg. inert gas such as stern or nitrogen, or both; if desired the nitrogen stream may provide the energy input and inert gas, and water may be added to the recycle gas to be converted into steam and provide another and preferred inert gas component. Thus the recycle line may also comprise one or more input lines for inert gas, and a mixer and a circulation means, but preferably the input line carrying high energy gas passes into the mixer to provide the circulation means.

Examples of suitable mixers are ones with no moving parts, such as venturi, injector/eductor and like mixers in which a jet of gas is passed, usually at right angles with a moving stream of gas resulting in mixing and energy transfer. The circulating means especially the fans, pumps or mixers have internal surfaces inert to the temperature conditions in the recycle line. Preferably steam is passed into the mixer with no moving parts at sufficient pressure to provide inert gas and circulation energy to the recycle gaseous material moving through the mixer; the steam may be at 1-100 bar for example 5-20 bar pressure and 110-250°C eg. 180-220°C. The relative weight of gases from the reactor which are recycled to those separated is usually 20:1 to 1:1 such as 15-3:1

At start up of the reactor, there may be employed the preliminary steps of (i) providing solid uncontaminated particles to the processing chamber after (ii) generating a circumferentially directed flow of fluid within the chamber to cause the uncontaminated particles to circulate about an axis of the chamber in a turbulent compact band.

The uncontaminated particles, which are usually stable to the volatilization conditions and are usually inorganic, may be previously treated contaminated material, from which the contaminants have been removed which is preferred, or other material, such as silica/alumina, or incineration pellets eg. sand or ceramic beads. When the spent particulate material is very fine powder and/or comprises halite, the other material, which is usually an inert solid, is preferably also present and extra may be added as required; at least some of the very fine powder spent material may be entrained by the exiting gas from the chamber and may be separated therefrom.

The fluid particles containing the organic contaminant are fed into the processing chamber either batch-wise, semi continuously or continuously. In a batch process the contaminated solid, which may be mixed with uncontaminated particles, may be treated in the processing chamber to cause volatilization until volatilization is complete. IN a semi continuous process the solid is added discontinuously to the chamber, more being added when the rate of volatilization appears to be slowing down, while in a continuous process contaminated solid is added by means of a continuous feed and reduced contaminated product is withdrawn both continuously. In all cases it is preferred to heat the processing chamber to the desired temperature eg. with hot flue gas before starting to feed the contaminated solid.

The feeding of the contaminated solid to the processing chamber is normally by way of a solids feeder eg. a gravity feeder, such as a hopper, and/or a solids displacement pump, in both cases with means of inhibiting entry of air or other oxidant gas into the processing chamber and usually exit of hot gases from the chamber. In a further aspect of the invention the contaminated solid is passed into the chamber in the form of a suspension in an inert liquid, especially in the form of a pumpable slurry; the weight content of the solid in the suspension may be 10 - 50%. The liquid is one which is volatilizable in the processing chamber and can be condensed out from the gaseous material produced and recycled for reuse. The liquid is usually a solvent for at least part of the organic contaminant, eg. cyclohexane or petroleum ether, and advantageously is the same as at least part of the organic contaminant eg. diesel oil or kerosene. The suspension may contain in solution some of the contaminants in the orginal solid which have been leached by the solvent. Pumpable slurries are easier to handle than the contaminated solid, especially drill cuttings which are usually sticky solids.

Advantageously the contaminated solids, whether as such or in slurry form pass into the processing chamber and fall towards the circulating solid band. They may drop directly onto said band or may pass through the upper zone first or may pass onto a distributor e.g. a rotating distributor and hence through said zone, with or without contact with a conical distributor extending outwardly downwards and beyond the internal edge of the band of solids (e.g. the blades).

The process of the invention reduces the organic contaminant level to a level lower than that of the contaminated solid preferably to less than 50%, 10% or 2% of the original level; thus the oil content of oil drill cuttings may be reduced to 100 ppm or less.

The process with an inert gas atmosphere, especially one comprising steam, enables a smaller lighter reactor to be used. This is of great benefit on a drilling platform where savings of weight and space are important. The reactor may also be of greater mobility, so that for example, it may be mounted on a truck and taken to the site of the contaminated solid eg. soil or sand contaminated with petroleum products. The process with recycle of product gaseous material also results in significant energy savings.

In the step of contacting the gaseous material with the liquid hydrocarbon, the hydrocarbon content of the gaseous material from the reactor is substantially reduced. The gaseous material may comprise (by weight) 5-90% hydrocarbons, 5-90% water and 5-90% non condensable gases, such as nitrogen and optionally carbon monoxide, and/or carbon dioxide. Preferably the gaseous material comprises at least 40% or preferably at least a majority of the non condensable gases e.g. 40-90% or 50-90% such as 40-60% or 60-80%, and usually 10-30% water and 10-40% hydrocarbons such as 20-40%. The hydrocarbons in the gaseous material may comprise ones of 1-4 carbons which may be alkanes and/or alkenes e.g. methane, ethane, propane and ethylene, but are preferably substantially all ones of 5-20 carbons preferably 5-10 carbons such as ones liquid at 25°C and atmospheric pressure, e.g. pentane, isopentane, and isomeric hexanes octanes and decanes, usually the hydrocarbons in the gaseous material are substantially the same as that which may be the original liquid organic contaminant eg. in the drill cuttings. The gaseous material is usually at 200-700°C when it leaves the toroidal reactor such as 300-500°C or 450-650°C, and advantageously it is at a temperature in these ranges e.g. substantially the same temperature when it contacts the liquid hydrocarbon. The higher the temperature of the material leaving the reactor the greater the degree of cracking in the reactor and the higher the percentage of lower hydrocarbons eg. of 1-4 carbons in the material.

The liquid hydrocarbon is usually at 90-150°C e.g. 100-120°C when it contacts the gaseous material. The liquid hydrocarbon may have 5-20 carbons and be an alkane, preferably as described above for possible components of the gaseous material; advantageously the liquid hydrocarbon comprises a portion of the liquid phase produced in this contacting step, which has been recycled. The relative weight amount of the liquid hydrocarbon to the gaseous material is usually at least 2:1 e.g. 2-50:1 such as 5-30:1, 5-15:1 or 15-25:1.

In the contacting step (c) of the method of recovering hydrocarbon from the contaminated solid gaseous material meets the liquid hydrocarbon, which is preferably in the form of droplets e.g. of 100-1000 micron average diameter. The meeting may be cocurrent, countercurrent or at an angle of 5-175° especially 45-135° and in particular, substantially normal. The cocurrent contact may be in the form of a falling film or a spray of liquid directed downwardly with and into the gaseous material, as in a column scrubber. Preferably however, the contact involves passing the gaseous material into and through a constriction resulting in a pressure decrease and then increase, the liquid being possibly added downstream of the constriction, but preferably in it or especially upstream of it. The passage of gaseous material through the constriction may be smooth with continuous decrease and then continuous increase in the cross sectional area of the constriction. This approach minimises the pressure drop across the constriction; examples of such contactors are venturi devices, such as ejector-eductors and venturi scrubbers. Alternatively the passage of the gaseous material through the constriction may not be smooth, which will increase the pressure drop across the constriction, but also increase the degree of mixing downstream of the constriction.

The output from the contactor is a gaseous phase which is of lower organic content compared to the gaseous material e.g. less than 50% (by weight) such as 10-40% or 0.01-15% of the value of the gaseous material and a liquid phase comprising the liquid-hydrocarbon-contacting liquid and hydrocarbon transferred from the gaseous material; it is usually substantially free of water. The output is usually at a temperature of at least 105°C, such as above 105°C e.g. 105-150°C especially 105-120°C under atmospheric pressure. The output passes to an insulated separator, e.g. a tank, especially with baffles or other devices to aid separation in which the liquid phase is separated from the gaseous phase.

The liquid phase may be removed and any solids therein e.g. fines carried over from the reactor may be separated; the liquid phase is substantially free of water. The liquid phase may be burnt as fuel or a portion may be removed and the remainder recycled for use as the liquid for contacting fresh gaseous material, especially after cooling e.g. to 90-120°C such as 100-110°C. The recycle ratio of recycled phase to removed phase may be 5-200:1 e.g. 10-100:1 such as 15-80:1.

From the separator, the gaseous phase still at 105-150°C usually contains unseparated droplets of liquid, which are advantageously separated in a demister, such as a candle demister.

The gaseous phase, with or without reduction in its droplet content, can then be treated further to recover its residual hydrocarbon content. The gaseous phase can be simply passed to a condenser operated at 20-90°C e.g. 50-85°C (under atmospheric pressure) with separation of a liquid phase primarily comprising water and optionally with an amount of hydrocarbons eg. 0.01-25% or 0.05-5% of the hydrocarbon content of the gaseous material, from a residual gaseous phase comprising the non condensable gases, and residual amounts of water and/or hydrocarbons. Preferably however, the hot gaseous phase at 105-150°C is passed into a second contactor, where it contacts a liquid e.g. water or other liquid comprising water to produce a liquid phase, especially a mixed liquid phase, and the residual gaseous phase. The liquid for the contact may be at 10-60°C e.g. 10-40°C, and is preferably at least a portion of the liquid phase product from the contactor; if desired a 2 phase mixed liquid phase product recycled from the contact may be used for the contact, but advantageously it is the aqueous phase, obtained after separation from the hydrocarbon. The liquid phase (whether or not any is removed for recycling) may, if required, be separated into a water and a hydrocarbon phase in a liquid separator, such as a flotation tank or hydrocyclone. If necessary or desired, any mixed liquid phase which is an emulsion may be treated to break the emulsion before the separator, e.g. by addition of a de-emulsifier. The water separated, which may contain less than 100ppm hydrocarbon eg. less than 40ppm hydrocarbon, may be used for generating steam, or discarded or used as the contact liquid. The hydrocarbons separated may be burnt or mixed with other hydrocarbons recovered. The gases from the condenser or second contactor are substantially hydrocarbon free and contain non-condensable gases such as carbon monoxide, carbon dioxide and nitrogen. Any combustible non condensable gases may be used as fuel for burners or boilers as described above or recycled as described below, while any uncondensed and non combustable gases eg. nitrogen, can be vented.

Preferably, the gaseous material from the reactor is selectively stripped in the first scrubber of at least a part, preferably a substantial part and especially substantially all of its liquid condensable hydrocarbon content, without co-separation of water, and then in the second scrubber is stripped of its water content usually together with the rest of its liquid condensable hydrocarbon content. By this means a large amount of the hydrocarbon can be cleanly recovered, with only a small amount needing separation from water.

The invention is illustrated in the accompanying drawings in which Fig. 1 represents flow diagram of a reactor with recycle lines, Fig. 2 shows schematically the reactor itself, Figs. 3 and 4 represent cross sections of other reactors, and Figs. 5 and 6 represent flow diagrams showing the reactor and different separation trains.

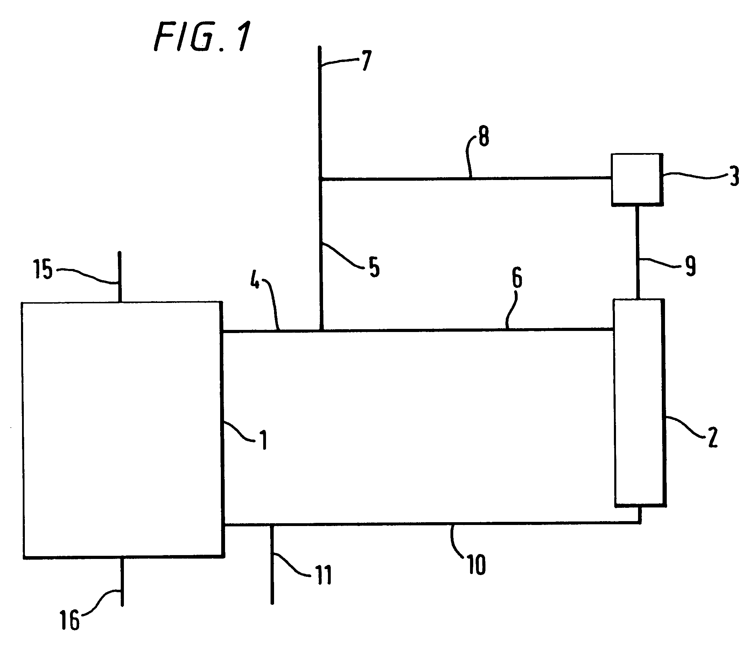

As shown in Fig. 1 the apparatus has a reactor 1, an ejector/eductor 2 and a steam boiler 3. Gas line 4 leads from reactor 1 but divides into line 5 and line 6, the latter of which connects with ejector/eductor 2. Line 5 itself divides into exit line 7 and a line 8 connecting to boiler 3. Steam inlet line 9 joins boiler 3 and ejector/eductor 2, which is itself connected to reactor 1 by recycle line 10. Reactor 1 is also fitted with solids inlet line 15 and solids exit line 16. A hot gas line 11 from burners (not shown) connects with line 10 near the reactor 1; alternatively line 11 may be fitted to reactor 1 (not shown).

In use contaminated solid is passed from a hopper (not shown) via line 15 into reactor 1 where it meets a hot inert gas atmosphere from line 10 comprising hot gases entering via line 11 and recycle gases from ejector/eductor 2. The meeting produces at least partly decontaminated solids which leave reactor 1 via line 16 and volatilized gaseous material which leaves via line 4. Some of the gaseous material passes via line 6 into the ejector/eductor 2 for recycle, while some passes up line 5 where some exits via line 7 (for recovery, condensation, combustion and ultimately venting) while the remainder moves along line 8 to boiler 3, where it is burnt to raise high pressure steam. This steam passes down line 9 and into ejector/eductor 2 to provide motive force for recycling the gases and to mix with the gases. The combined gases are recycled in line 10 back to reactor 1.

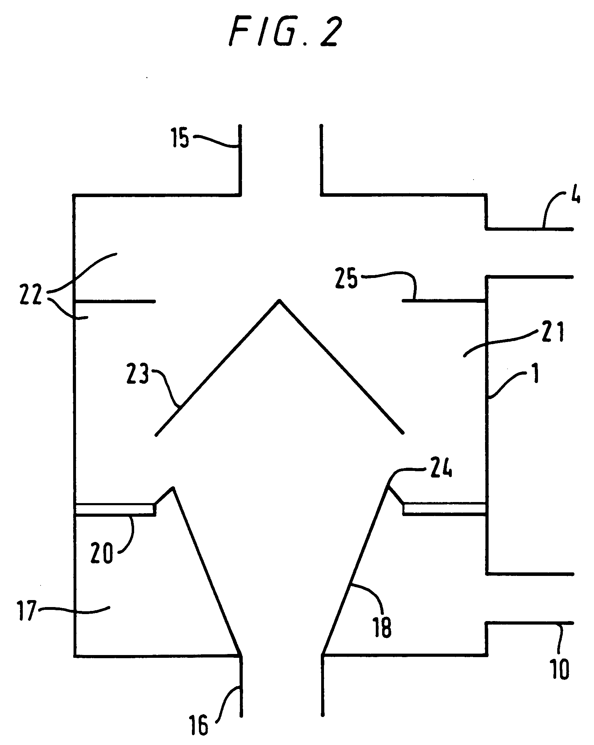

Reference is made to Fig. 2 which shows schematically the outline of a TORBED^{R} reactor which is based on that in EP-A-0068853, with inlet line 10 for input gases leading to an annular lower zone 17 (which is a hot gas swirl chamber) and which surrounds a frustoconical duct 18 of downwardly decreasing diameter leading to solids exit line 16. In gaseous communication with said zone 17 is an annulus of blades 20 at an angle to the horizontal which allows the gas to pass therethrough but provide it with a circumferential as well as upward movement. Blades 20 and above them a volatilization chamber 21 are in an upper zone 22 to said reactor which is fitted with solid inlet line 15 and gaseous exit line 4. Spaced between line 4 and chamber 21 is an annular baffle 25. Directly below solid line 15 is an inverted conical distributor 23 which outwardly extends beyond a weir 24 which is inside the annulus of blades 20. The weir 24 leads to the frustoconical duct 18. Means (not shown) is provided for heating the gas in annular zone 17. In use a toroidal band of solids is maintained above the blades 20 and circumferentially moved thereon by the upward gas flow from zone 17. Organic contaminated solids are fed through line 15 from the hopper (not shown) without entry of gas such as air onto distributor 23, which spreads them onto the band of solids over the blades 20 where they are heated by the hot gas flow causing volatilization and generation of a gaseous material, which leaves chamber 21 round baffle 25 and hence line 4 and a solid decontaminated residue eg. substantially oil free drill cuttings which fall over weir 24 and pass via duct 18 and line 16 without entry of any external gas eg. air back up line 16 into the upper zone 22.

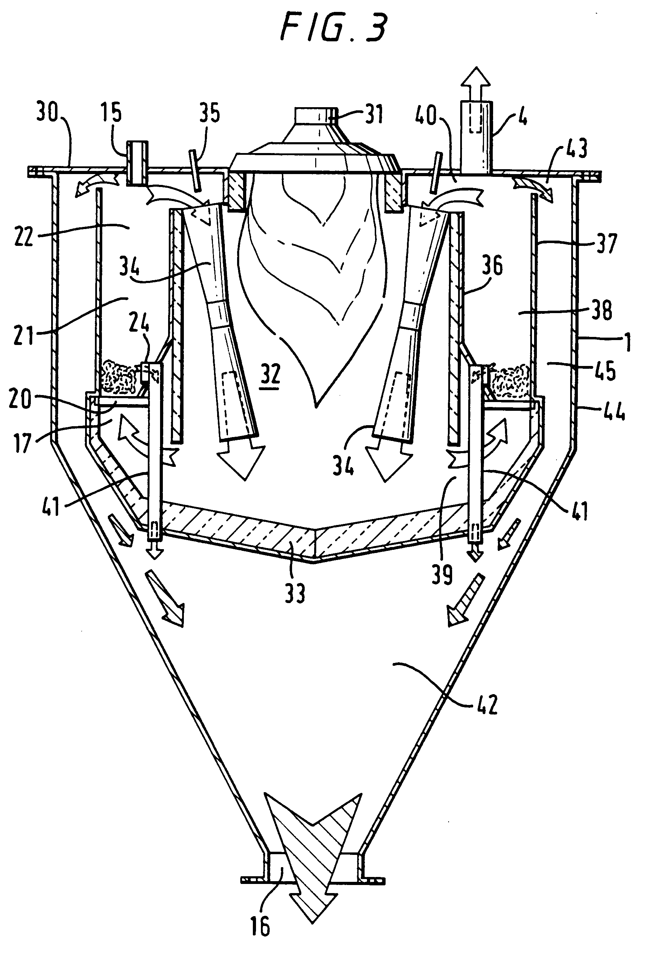

Referring now to Fig. 3, reactor 1 has in its top 30 a contaminated solids entry line 15 and a central burner 31 in a central zone 32 extending downwards through the reactor to a bowl shaped insulated wall 33. Inside central zone 32 are downwardly but centrally inclined venturi mixers 34 coaxial with but spaced from steam nozzles 35 in the reactor top 30. Surrounding central zone 32 is an inner wall 36, which with an outer wall 37 defines an annulus 38. A passage 39 between inner wall 36 and insulated wall 33 allows gas to move from central zone 32 to annular lower zone 17. Above lower zone 17 in annulus 38 lies the blade annulus 20. Above blade annulus 20 is the volatilisation chamber 21 and upper zone 22 and solids entry line 15. Between inner wall 36 and top 30 is a second passage 40 in communication with the mixer 34. Internal of blade annulus 20 is weir 24 leading to a solids outlet line 41, which extends downwardly through the lower zone 17 and wall 33 into a solids discharge zone 42 of frustoconical shape leading to solids exit line 16. A fines passage 43 lies between reactor top 30 and outer wall 37, which with reactor wall 44 defines a fines annulus 45 in solid communication with solids discharge zone 42.

In use, burner 31 produces in the central zone 32 heat and combustion gas which passes e.g. at 750°C through passage 39 into the lower zone 17 and up through the blade annulus 20 on which the solids to be treated move as an annular band and onto which contaminated solids are fed via line 15. The gases produced in the volatilisation zone 21 pass upwardly e.g. at 400°C and return to the central zone via passage 40 through venturi 34, drawn as a result of high pressure steam from nozzle 35 injected into venturi 34. Fines carried upward with the gases pass through passage 43 and down annulus 45 and into solids discharge zone 42. Treated solids from the blade annulus 20 fall over the weir 24, down outlet 41 and into zone 42. Continuously or continually solids from zone 42 are dropped out of the reactor through line 16.

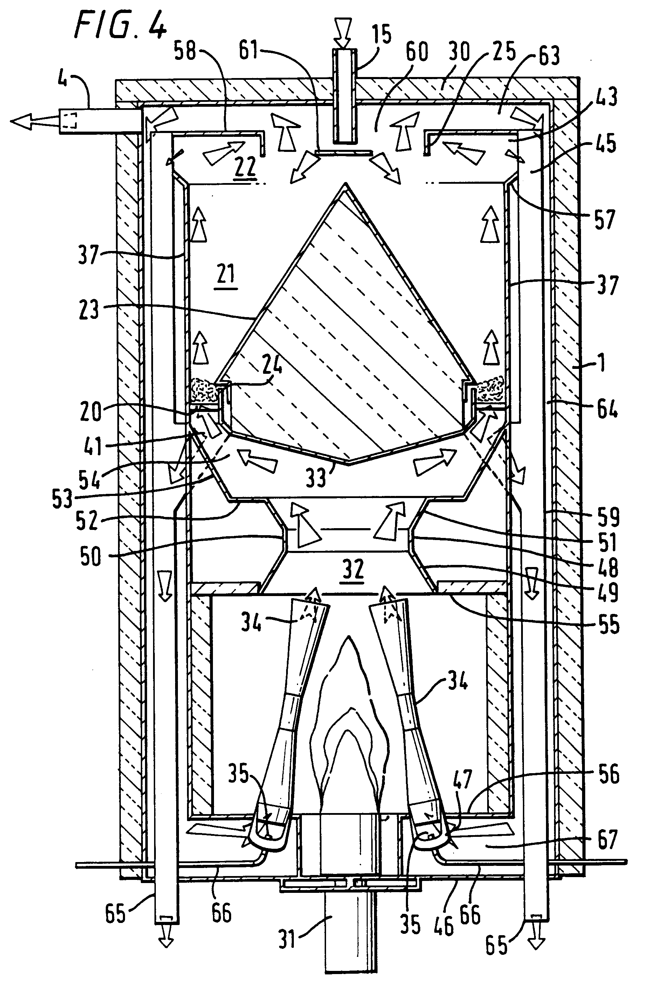

Referring now to Fig. 4, reactor 1 has in its bottom 46 a central burner 31 in a central zone 32 extending upwards through the reactor to a angular bowl shaped insulated wall 33. Inside central zone 32 are long upwardly extending but inwardly inclined venturi mixers 34 coaxial with steam nozzles 35 extending in from outside the reactor. Each mixer 34 has an entry 47 in its base for recycled gas. Above burner 31 and venturi mixers 34 lies a mixing throat 48 (or short venturi mixer) with a downwardly flared portion 49, a central portion 50 and an upwardly outwardly extending portion 51 attached to a transverse annular ledge 52 itself attached to an upwardly extending frustoconical funnel 53 forming with wall 33 a progressively constricted passage 54 leading to annular blades 20. If desired ledge 52 may be an annular plate attached to wall 37 by struts 53, the passage 54 being then between wall 33 and wall 37. Portion 49 of the throat 48 is attached to an annular support 55 or may be separated therefrom by a small annular gap (not shown) with throat 48 thus being attached to wall 37 via funnel or struts 53. Distant from burner 31 on the other side of wall 33 is volatilization chamber 21, which is above blades 20. Centrally mounted in chamber 21 is a conical distributor 23 outwardly extending beyond an annular weir 24 inward of blades 20 but higher than them to define with inner wall 37 (to chamber 21) a zone for a bed of particles. Inner wall 37 extends downward and is attached to support 55 and defines lower zone 17 below blades 20, the bottom 56 of said zone 17 having mixers 34 and burner 31 passing through it Downwardly and then Outwardly extending downward from weir 24 is solids exit line 41 (usually more than l in number e.g. 8 and preferably regularly distributed around the periphery of weir 24) passing through wall 33 and funnel 53 (or passing between struts 53) and inner wall 37. Inner wall 37 at the top 22 of chamber 21 has an outwardly extending section 57 which with inner top 58 to chamber 21 forms an outwardly constricting passage 43 for fines, leading to a fines annulus 45 extending outside inner wall 37, meeting solids exit line 41 and leading via solids annulus 59 to solid outlet 65. Inner top 58 has a-central orifice 60 through which extends solids inlet pipe 15, below which but centrally positioned above conical distributor 23 is a plate distributor 61 which may be spinning. Orifice 60 is bounded by a short axial cylindrical baffle 25. Above inner top 58 is top 30 to reactor 1. Between tops 58 and 30 is a radially extending passage 63 leading through reactor 1 to vapour outlet line 4. Passage 63 and line 4 are also open to an annular cavity 64 extending around fines annuli 45 and 59 and steam line 66. Cavity 64 opens into radial cavity 67 in gaseous communication with entry 47 to mixer 34.

In use contaminated solids enter reactor 1 via line 15, fall onto distributor 61 and pass through zone 22 outward with or without contacting distributor 23 on the way towards annular blades 20, on which is a band of solid. The band of solid is supported by a hot upwardly and outwardly moving gaseous mixture, which has been made by mixing in throat 48 completely combusted flue gas from burner 31 and a mixture of high pressure steam and recycled gaseous material from venturi mixers 34. The organic contaminants of the contaminated solids on and/or above the band are formed into gaseous material in chamber 21 and move upwards still with a spinning motion as a result of passage of the gas mixture through the blades 20. The spinning motion of the gaseous material causes fines therein to be thrown towards inner wall 37 and pass through passage 43 and down line 45, where they meet decontaminated solids leaving over weir 24 down line 41 and together they leave via outlet 65. The gaseous material comprising gaseous organics and depleted of some fines, passes upward into passage 63, and most leaves reactor 1 via outlet 4 while the remainder is recycled via cavity 64 and steam line 66 into mixer 34. The gaseous material in outlet 4 may if desired (not shown) have its fines content further reduced by passage through a filter or cyclone attached to the reactor, with return of fines back into the reactor and down annulus 45.

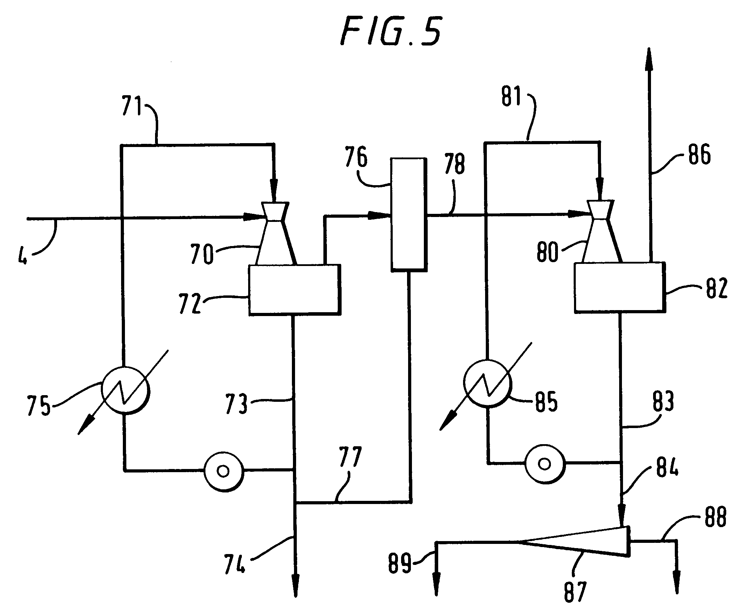

In Fig. 5, gas exit line 4 from reactor 1 leads to a venturi scrubber 70 into which also leads a recycle line 71. Scrubber 70 is in communication with separator tank 72 to separate a liquid and an aqueous phase. A liquid line 73 divides into liquid exit line 74 to oil storage and recycle line 71. Between line 74 and scrubber 70 along recycle line 71 is a heat exchanger 75. A gas line 78 leads from tank 72 to a demister 76, from which a liquid recovery line 77 leads to exit line 74.

A gas line 79 from demister 76 communicates with a venturi scrubber 80, into which also leads a recycle line 81. Scrubber 80 communicates with a separator tank 82 to separate a liquid and an aqueous phase from a gas phase. A liquid line 83 divides into liquid exit line 84 and recycle line 81. Between line 84 and scrubber 80 along recycle line 81 is a heat exchanger 85. A gas line 86 leads from tank 82 to waste. Liquid exit line 84 feeds into a hydrocyclone 87, which has an overflow line 88 for oil and underflow line 89 for water.

In use the hot exit gas from the reactor, comprises water, hydrocarbons and usually carbon monoxide, carbon dioxide and nitrogen. The gas in line 4 at 350°C passes to scrubber 70 where it meets recycle liquid hydrocarbon entering via line 71 at 100°C, the relative masses of gas and recycle hydrocarbon being about 1:20. The outflow from the scrubber passes directly into the separator tank 72 which is fitted with baffles and is at about 110°C. Liquid hydrocarbons from the gas separate, pass down line 73, a portion is recycled in line 71 via heat exchanger 75 and the rest passes in line 74 to oil storage. The gaseous phase in line 78 separated from the liquid in tank 72 is demisted in demister 76 to recover more liquid which passes via line 77 to line 74 for storage and the demisted gas in line 79 is passed to a second venturi scrubber 80, where it meets recycle liquid comprising water, and usually hydrocarbon, at 20°C in line 81.

The scrubber output at 80°C is separated in tank 82 to give a gas, which leaves as waste in line 86 predominantly nitrogen and carbon monoxide and dioxide, and mixed liquid which leaves via line 83, along which a portion is recycled via exchanger 85 at 20°C into line 81 and hence scrubber 80 and the rest is fed into hydrocyclone 87 which produces an oil overflow in line 88 and a water underflow in line 89.

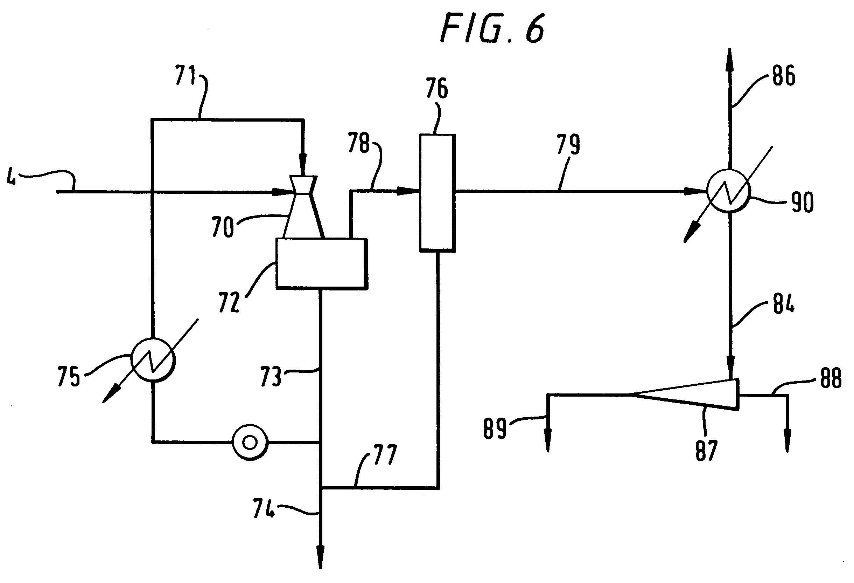

Fig. 6 represents a modification of the apparatus of Fig. 5, in which the venturi scrubber 70 and recycle line 71 are as in Fig. 5, but after the demister 76 the gas in line 79 is passed directly to a condenser 90 at 80°C to produce waste gas in line 86 and a mixed liquid which passes in line 84 to a hydrocyclone 87 with underflow 89 and overflow 88 lines as in Fig. 5.

The present invention is also illustrated in the following Examples.

### Example 1

Apparatus as shown in Fig. 2 but without the annular baffle 25 was used to decontaminate oil drill cuttings from Andrew shale, wet with a diesel oil based drilling fluid also containing calcium chloride and barytes. The cuttings contained (by weight) 83.3% inorganic solid, 10.3% volatile organic contaminant and 6.4% water. Combustion of propane with insufficient air in external burners supplied through line 10 hot flue gases for the fluid passing through the toroidal band of particles. The temperature 25 mm above the blade ring was varied in different experiments from 575 - 650°c.

The exit gas comprising the flue gases and gaseous material from the oil and solid fines was passed through a cyclone to remove the fines and leave a gas, which was cooled in liquid nitrogen to separate all water and organic materials, which comprised predominantly recovered diesel oil, from noncondensable gases, such as carbon monoxide.

The results showed that with a 6.0kg/hr feed of oil drill cuttings, coarse decontaminated cuttings from discharge pipe 16 were produced in amount of 2.89 - 3.06 kg/hr and fines decontaminated cuttings from the cyclone were produced in amount of 0.538 - 0.564 kg/hr with a total solids recovery of 57.1 - 60. 1%. At 650°c the amounts of coarse and fine cuttings were 2.90 and 0.564 kg/hr respectively and their total organic contents were <10 and 24 mg/dm³ respectively according to the leach test of EPA (USA) FR 3601 (1990).

### Example 2

The apparatus as shown in Figs. 1 and 2 with added burners to feed hot flue gas into lower zone 17 is used to decontaminate the oil drill cuttings used as in Example 1. In the apparatus, the temperature of fluid passing through the toroidal band of particles is 750°c. The drill cutting feed in line 15 of 6500 kg/hr solids, 800 kg/hr volatiles and 500 kg/hr water is converted into a decontaminated solid in line 16 of 6500 kg/hr at 400°c with oil content less than 10 ppm. Details of the flows and temperatures in various lines are as shown in the Table below.

| LINE | FLOW KG/HR | | | |
|---|---|---|---|---|
| | STEAM | VOLATILES | PRODUCTS OF COMBUSTION | TEMPERATURE °C |
| 4 | 4180 | 2012 | 5026 | 400 |
| 5 | 1661 | 800 | 1999 | 400 |
| 6 | 2519 | 1212 | 3027 | 400 |
| 9 | 875 | - | - | 200 |
| 10 | 3394 | 1212 | 3027 | 374 |

### Example 3

The exit gases from a reactor used as in Example 2 with a reactor and vapour temperature of about 600°C are purified according to the process of the invention in an apparatus as described with respect to and illustrated in Figure 5. Typical flow rates in the various lines (in kg/hr) are as follows.

| Line | Nature | Mass Flow Rate | | | Total Mass Flow Rate |
|---|---|---|---|---|---|
| | | Gas | Water | Oil | |
| 4 | Input to first scrubber | 550 | 220 | 330 | 1100 |
| 71 | Recycle first scrubber | 0 | 0 | 22000 | 22000 |
| 74 | Liquid exit from first scrubber loop | 0 | 0 | 264 | 264 |
| 78 | Input to second scrubber | 550 | 220 | 66 | 836 |
| 81 | Recycle second scrubber | 0 | 15048 | 1672 | 16720 |
| 84 | Liquid exit from second scrubber | 0 | 220 | 66 | 286 |

### Example 4

In another process similar to that of Ex 3, the reactor vapour gases are at 400°C as are the gases in line 4. The drilling fluid comprises an oil which substantially all boils above 110°C and is not significantly cracked at 400°C, so that essentially all the oil condenses in the first scrubber (exit line 74 having 327 kg/hr flow only of oil), leaving only about 1% of the oil input from line 4 in the input in line 78 to the second scrubber, making a total mass flow in line 78 of 773 kh/hr. In the second scrubber the recycle liquid in line 81 and liquid exit in line 84 are essentially water (with about 1% of oil), the liquid in line 81 has a total mass flow of 7730 kg/hr. Essentially all the rest of the oil is removed in the second scrubber. The liquid in line 84 is separated in hydrocyclone 87 into water in line 89 containing 40ppm oil , and oil in line 88.

## Claims

1. A method for reducing the organic content of solid particles containing at least one organic contaminant, which method comprises:
(a) providing solid particles contaminated with an organic contaminant to an upper zone of a processing chamber having a substantially non-oxidising atmosphere,
(b) passing a non-oxidizing fluid from a lower zone of said chamber to said upper zone to generate a circumferentially directed flow of fluid within the chamber to cause the particles to circulate about a substantially vertical axis of the chamber in a turbulent compact band,
(c) heating to convert in said atmosphere, at least one organic contaminant with the particles into a gaseous material,
(d) removing the particles having a reduced organic contaminant level from the chamber, and
(e) recycling at least part of said gaseous material without removal of condensible components therefrom from above said band in said upper zone to said lower zone and then to pass through the band and become at least part of said fluid.
and (f) passing high energy gas into said chamber in order to provide the motive force for supporting the particles in the band and/or the recycling.

2. A method according to claim 1, wherein the organic contaminant is a liquid at 25°C.

3. A method according to claim 1 or 2 wherein the conversion is performed in the substantial absence of cracking of the organic contaminant.

4. A method according to any one of the preceding claims wherein said solid particles contain 1-20% by weight of said contaminant.

5. A method according to claim 4 wherein said particles also comprise water.

6. A method according to claim 5 wherein said particles are drill cuttings.

7. A method according to any one of the preceding claims, wherein steam or water is injected into said chamber.

8. A method according to any one of the preceding claims wherein said fluid constitutes an inert atmosphere and comprises flue gas and steam.

9. A method according to claim 8 wherein steam is injected into a mixer with no moving parts to effect mixing with gaseous material to produce at least part of said fluid.

10. A method according to claim 8 or 9 wherein said flue gas is generated by a burner at the base of said processing chamber, passes through a lower zone to said chamber below said band arid then passes through said band to from at least part of said fluid.

11. A method according to any one of the preceding claims wherein some of said gaseous material is condensed to produce at least one organic liquid.

12. A method according to claim 11, which comprises contacting said gaseous material, which comprises condensable hydrocarbons and water, with a liquid hydrocarbon to produce a liquid phase substantially free of water and a gaseous phase of reduced organic content.

13. A method according to claim 12 wherein said contact is via a Venturi mixer.

14. A method according to claim 12 or 13 wherein said gaseous phase is cooled to form liquid comprising water and condensable hydrocarbon and a second gaseous phase, and separating said liquid and said second gaseous phase.

15. An apparatus suitable for reducing the organic content of organic contaminated solid particles, which comprises:
(a) a processing chamber having an upper conversion zone and a lower zone in gaseous communication with said upper zone,
(b) means for providing said solid particles to said upper zone,
(c) means for providing fluid to said lower zone,
(d) means for generating a circumferentially directed flow of fluid in said upper zone to cause said particles to circulate in said upper zone about a substantially vertical axis in said chamber in a turbulent compact band,
(e) heating means for converting at least some of the organic contaminant to a gaseous material,
(f) means for removing particles from said band,
(g) means for recycling at least part of said gaseous material without removal of condensible components therefrom from said upper zone to said lower zone and hence back to said upper zone through said band,
and (n) a mixer in said chamber and circulating means comprising one or more input lines for high energy gas passing into said mixer.

16. Apparatus according to claim 15 wherein said mixer has no moving parts.

17. An apparatus according to claim 15 or 16 which comprises:
(h) contacting means for contacting said gaseous material with an organic liquid to produce a gaseous phase and a liquid phase comprising at least some of said organic component and
(i) separating means for separating said gaseous phase from said liquid phase.

18. Apparatus according to claim 17 which comprises
(j) means for recycling a portion of said liquid phase to said contacting means (h).

19. Apparatus according to claim 17 or 18 which comprises
(k) means for contacting said gaseous phase with a second liquid to produce a second gaseous phase and a second liquid phase and
(l) means for separating said second gaseous phase from said second liquid phase.

20. Apparatus according to any one of claims 15-19 wherein said means (d) comprises a series of angular blades arranged in an annulus at the base of said upper conversion zone, said upper and lower zones being in gaseous communication through said series of blades.

21. Apparatus according to any one of claims 15-20 which comprises means for injecting steam into a mixer without moving parts in said chamber to mix with said gaseous material.

22. Apparatus according to any one of claims 15-21 which comprises a burner at the base of said chamber to produce flue gas, for use as at least part of said fluid.

23. Apparatus according to claim 21 or 22, which comprises in said chamber said steam injection means, an inlet for recycled gaseous material to mix with said steam, said burner for flue gas and a mixing zone for mixing said steam, gaseous material and flue gas.

## Patentansprüche

1. Verfahren zur Verminderung des organischen Anteils von festen Teilchen, die mindestens eine organische Verunreinigung enthalten, wobei das Verfahren umfaßt:
(a) Bereitstellen von festen Teilchen, die mit einer organischen Verunreinigung verunreinigt sind, für eine obere Zone einer Verarbeitungskammer, die eine im wesentlichen nichtoxidierende Atmosphäre aufweist,
(b) Leiten eines nichtoxidierenden Fluids aus einer unteren Zone der Kammer zu der oberen Zone unter Erzeugung eines umlaufenden Fluidstroms innerhalb der Kammer, um die Teilchen um eine im wesentlichen vertikale Achse der Kammer in einem turbulenten, dichten Band im Kreislauf zu halten,
(c) Erhitzen, um in der Atmosphäre mindestens eine mit den Teilchen vorliegende organische Verunreinigung zu gasförmigem Material umzusetzen,
(d) Entfernen der Teilchen mit vermindertem Anteil organischer Verunreinigung aus der Kammer, und
(e) Zurückführen mindestens eines Teils des gasförmigen Materials, ohne Entfernen kondensierbarer Komponenten daraus aus dem vorstehend genannten Band in der oberen Zone zu der unteren Zone, und anschließend zum Durchleiten durch das Band, um mindestens ein Teil des Fluids zu werden,
und (f) Leiten von energiereichem Gas in die Kammer, um die Bewegungskraft zum Tragen der Teilchen in dem Band und/oder der Zurückführung bereitzustellen.

2. Verfahren nach Anspruch 1, wobei die organische Verunreinigung bei 25°C eine Flüssigkeit ist.

3. Verfahren nach Anspruch 1 oder 2, wobei die Umwandlung im wesentlichen in Abwesenheit von Cracken der organischen Verunreinigung ausgeführt wird.

4. Verfahren nach einem der vorangehenden Ansprüche, wobei die festen Teilchen 1-20 Gewichtsprozent der Verunreinigung enthalten.

5. Verfahren nach Anspruch 4, wobei die Teilchen auch Wasser umfassen.

6. Verfahren nach Anspruch 5, wobei die Teilchen Bohrspäne sind.

7. Verfahren nach einem der vorangehenden Ansprüche, wobei Dampf oder Wasser in die Kammer injiziert wird.

8. Verfahren nach einem der vorangehenden Ansprüche, wobei das Fluid aus einer inerten Atmosphäre besteht und Abgas und Dampf umfaßt.

9. Verfahren nach Anspruch 8, wobei der Dampf in einen Mischer ohne bewegte Teile injiziert wird, um Vermischen mit dem gasförmigen Material zu bewirken, damit mindestens ein Teil des Fluids erzeugt wird.

10. Verfahren nach Anspruch 8 oder 9, wobei das Abgas mit einem Brenner am Grunde der Verarbeitungskammer erzeugt wird, durch eine untere Zone der Kammer unterhalb des Bandes geleitet wird und dann durch das Band geleitet wird, um mindestens einen Teil des Fluids zu erzeugen.

11. Verfahren nach einem der vorangehenden Ansprüche, wobei etwas des gasförmigen Materials unter Erzeugung mindestens eines Teils einer organischen Flüssigkeit kondensiert wird.

12. Verfahren nach Anspruch 11, umfassend Inkontaktbringen des gasförmigen Materials, das kondensierbare Kohlenwasserstoffe und Wasser umfaßt, mit einem flüssigen Kohlenwasserstoff unter Erzeugung einer im wesentlichen wasserfreien, flüssigen Phase und einer gasförmigen Phase mit vermindertem organischem Anteil.

13. Verfahren nach Anspruch 12, wobei der Kontakt über einen Venturi-Mischer erfolgt.

14. Verfahren nach Anspruch 12 oder 13, wobei die Gasphase gekühlt wird unter Bildung einer Flüssigkeit, die Wasser und kondensierbaren Kohlenwasserstoff umfaßt, und einer zweiten gasförmigen Phase und die flüssige und die zweite gasförmige Phase getrennt werden.

15. Vorrichtung, geeignet zur Verminderung des organischen Anteils von organisch verunreinigten festen Teilchen, umfassend:
(a) eine Verarbeitungskammer mit einer oberen Umwandlungszone und einer unteren Zone in gasförmiger Kommunikation mit der oberen Zone,
(b) eine Einrichtung zur Bereitstellung der festen Teilchen für die obere Zone,
(c) eine Einrichtung zur Bereitstellung eines Fluids für die untere Zone,
(d) eine Einrichtung zur Erzeugung eines umlaufenden Fluidstroms in der oberen Zone, um die Teilchen in der oberen Zone um eine im wesentlichen vertikale Achse in der Kammer in einem turbulenten, dichten Band im Kreislauf zu halten,
(e) eine Heizeinrichtung zur Umwandlung mindestens etwas der organischen Verunreinigung zu einem gasförmigen Material,
(f) eine Einrichtung zum Entfernen von Teilchen aus dem Band,
(g) eine Einrichtung zur Zurückführung mindestens eines Teils des gasförmigen Materials, ohne Entfernung von kondensierbaren Komponenten daraus aus der oberen Zone zu der unteren Zone und folglich zurück zu der oberen Zone durch das Band,
und (n) einen Mischer in der Kammer und eine Umlaufeinrichtung, die eine oder mehrere Eingangsleitung(en) für energiereiches Gas, das in den Mischer geleitet wird, umfaßt.

16. Vorrichtung nach Anspruch 15, wobei der Mischer keine bewegten Teile aufweist.

17. Vorrichtung nach Anspruch 15 oder 16, umfassend:
(h) eine Kontakteinrichtung zum Inkontaktbringen des gasförmigen Materials mit einer organischen Flüssigkeit, um eine gasförmige Phase und eine flüssige Phase, die mindestens etwas der organischen Komponente umfaßt, zu erzeugen, und
(i) eine Trenneinrichtung zum Abtrennen der gasförmigen Phase von der flüssigen Phase.

18. Vorrichtung nach Anspruch 17, umfassend
(j) eine Einrichtung zur Zurückführung eines Teils der flüssigen Phase in die Kontakteinrichtung (h).

19. Vorrichtung nach Anspruch 17 oder 18, umfassend
(k) eine Einrichtung zum Inkontaktbringen der gasförmigen Phase mit einer zweiten Flüssigkeit, um eine zweite gasförmige Phase und eine zweite flüssige Phase zu erzeugen, und
(l) eine Einrichtung zum Abtrennen der zweiten gasförmigen Phase von der zweiten flüssigen Phase.

20. Vorrichtung nach einem der Ansprüche 15-19, wobei die Einrichtung (d) eine Reihe von Winkelblättern, angeordnet in einem Ring am Grunde der oberen Umwandlungszone, umfaßt, wobei obere und untere Zonen durch die Reihe von Blättern in gasförmiger Kommunikation steht.

21. Vorrichtung nach einem der Ansprüche 15-20, umfassend eine Einrichtung zum Injizieren von Dampf in einen Mischer ohne bewegte Teile in der Kammer, um mit dem gasförmigen Material zu vermischen.

22. Vorrichtung nach einem der Ansprüche 15-21, umfassend einen Brenner am Grunde der Kammer zur Erzeugung von Abgas, zur Verwendung als zumindest einen Teil des Fluids.

23. Vorrichtung nach Anspruch 21 oder 22, umfassend in der Kammer die Dampfinjektionseinrichtung, einen Einlaß für zurückgeführtes gasförmiges Material zum Vermischen mit dem Dampf, den Brenner für das Abgas und eine Mischzone zum Vermischen des Dampfes, des gasförmigen Materials und des Abgases.

## Revendications

1. Procédé pour réduire la teneur en matières organiques de particules solides contenant au moins un contaminant organique, procédé qui consiste :
(a) à introduire lesdites particules solides contaminées par un contaminant organique dans une zone supérieure d'une chambre de traitement contenant une atmosphère sensiblement non oxydante ;
(b) à faire passer un fluide non oxydant à partir d'une zone inférieure de ladite chambre vers ladite zone supérieure pour créer un courant de fluide dirigé selon la circonférence à l'intérieur de la chambre et forcer les particules à circuler autour d'un axe sensiblement vertical de la chambre selon une bande compacte turbulente ;
(c) à chauffer pour convertir, dans ladite atmosphère, au moins un contaminant organique avec les particules en une matière gazeuse ;
(d) à retirer les particules ayant une teneur réduite en contaminant organique de la chambre ; et
(e) à recycler au moins une partie de ladite matière gazeuse sans éliminer les composants condensables au-dessus de ladite bande dans ladite zone supérieure vers ladite zone inférieure, puis lui faire traverser la bande et devenir au moins une partie dudit fluide ; et
(f) à faire passer un gaz à énergie élevée dans ladite chambre afin de fournir la force motrice nécessaire pour supporter les particules dans la bande et/ou effectuer le recyclage.

2. Procédé selon la revendication l, dans lequel le contaminant organique est liquide à 25°C.

3. Procédé selon l'une des revendications 1 ou 2, dans lequel la conversion est réalisée en l'absence sensible de craquage du contaminant organique.

4. Procédé selon l'une des revendications précédentes, dans lequel lesdites particules solides contiennent 1 à 20 % en poids dudit contaminant.

5. Procédé selon la revendication 4, dans lequel lesdites particules comprennent également de l'eau.

6. Procédé selon la revendication 5, dans lequel lesdites particules sont des déblais de forage.

7. Procédé selon l'une des revendications précédentes, dans lequel de la vapeur d'eau ou de l'eau est injectée dans ladite chambre.

8. Procédé selon l'une des revendications précédentes, dans lequel ledit fluide constitue une atmosphère inerte et comprend un gaz de combustion et de la vapeur d'eau.

9. Procédé selon la revendication 8, dans lequel de la vapeur d'eau est injectée dans un mélangeur sans aucune pièce mobile pour effectuer le mélange avec la matière gazeuse et produire au moins une partie dudit fluide.

10. Procédé selon l'une des revendications 8 ou 9, dans lequel ledit gaz de combustion est créé par un brûleur à la base de ladite chambre de traitement, traverse une zone inférieure vers ladite chambre au-dessous de ladite bande, puis traverse ladite bande pour former au moins une partie dudit fluide.

11. Procédé selon l'une des revendications précédentes, dans lequel une partie de ladite matière gazeuse est condensée pour produire au moins un liquide orqanique.

12. Procédé selon la revendication 11, qui consiste à mettre en contact ladite matière gazeuse, qui comprend des hydrocarbures condensables et de l'eau, avec un hydrocarbure liquide pour produire une phase liquide sensiblement exempte d'eau et une phase gazeuse ayant une teneur réduite en produits orqaniques.

13. Procédé selon la revendication 12, dans lequel ledit contact se fait à l'aide d'un mélangeur Venturi.

14. Procédé selon l'une des revendications 12 ou 13, dans lequel ladite phase gazeuse est refroidie afin de former un liquide comprenant de l'eau et un hydrocarbure condensable et une deuxième phase gazeuse, et ledit liquide et ladite deuxième phase gazeuse sont séparés.

15. Appareil approprié pour réduire la teneur en matières organiques de particules solides contaminées par des matières organiques, qui comprend :
(a) une chambre de traitement ayant une zone de conversion supérieure et une zone inférieure en communication gazeuse avec ladite zone supérieure ;
(b) un moyen pour fournir lesdites particules solides à ladite zone supérieure ;
(c) un moyen pour fournir un fluide à ladite zone inférieure ;
(d) un moyen pour créer un courant de fluide dirigé selon la circonférence dans ladite zone supérieure forçant lesdites particules à circuler dans ladite zone supérieure autour d'un axe sensiblement vertical dans ladite chambre selon une bande compacte turbulente ;
(e) un moyen de chauffage pour convertir au moins une partie du contaminant organique en une matière gazeuse ;
(f) un moyen pour retirer les particules de ladite bande ;
(g) un moyen pour recycler au moins une partie de ladite matière gazeuse sans retrait de composants condensables à partir de ladite zone supérieure vers ladite zone inférieure et donc revenir vers ladite zone supérieure à travers ladite bande ; et
(n) un mélangeur dans ladite chambre et un moyen de circulation comprenant une ou plusieurs canalisations d'entrée pour qu'un gaz à énergie élevée passe dans ledit mélangeur.

16. Appareil selon la revendication 15, dans lequel ledit mélangeur ne possède aucune pièce mobile.

17. Appareil selon l'une des revendications 15 ou 16 qui comprend :
(h) un moyen de mise en contact pour mettre en contact ladite matière gazeuse avec un liquide organique afin de produire une phase gazeuse et une phase liquide comprenant au moins une partie dudit composant organique ; et
(i) un moyen de séparation pour séparer ladite phase gazeuse de ladite phase liquide.

18. Appareil selon la revendication 17, qui comprend :
(j) un moyen pour recycler une portion de ladite phase liquide vers ledit moyen de contact (h).

19. Appareil selon l'une des revendications 17 ou 18, qui comprend :
(k) un moyen pour mettre en contact ladite phase gazeuse avec un deuxième liquide pour produire une deuxième phase gazeuse et une deuxième phase liquide ; et
(l) un moyen pour séparer ladite deuxième phase gazeuse de ladite deuxième phase liquide.

20. Appareil selon l'une des revendications 15 à 19, dans lequel ledit moyen (d) est constitué d'une série de lames angulaires disposées en anneau à la base de ladite zone de conversion supérieure, lesdites zones supérieure et inférieure étant en communication gazeuse à travers ladite série de lames.

21. Appareil selon l'une des revendications 15 à 20, qui comprend un moyen pour injecter de la vapeur d'eau dans un mélangeur sans qu'il y ait de pièces mobiles dans ladite chambre pour la mélanger avec ladite matière gazeuse.

22. Appareil selon l'une des revendications 15 à 21, qui comprend un brûleur à la base de ladite chambre afin de produire un gaz de combustion, qui est utilisé pour former au moins une partie dudit fluide.

23. Appareil selon l'une des revendications 21 ou 22, qui comprend dans ladite chambre ledit moyen d'injection de vapeur d'eau, une entrée pour la matière gazeuse recyclée afin de la mélanger avec ladite vapeur d'eau, ledit brûleur pour le gaz de combustion et une zone de mélange pour mélanger avec ladite vapeur d'eau, la matière gazeuse et le gaz de combustion.
